# EUROPÄISCHE PATENTSCHRIFT

(11) **EP 0 793 886 B1**
(45) Veröffentlichungstag und Bekanntmachung des Hinweises auf die Patenterteilung: **28.04.2004**
(21) Anmeldenummer: 95941619.9
(22) Anmeldetag: 21.11.1995
(51) Int. Cl.: H04N 5/63

(54) **FERNSTEUERBARE SCHALTUNGSANORDNUNG**
REMOTE-CONTROLLED CIRCUITRY
CIRCUITERIE TELECOMMANDEE

(30) Priorität: 22.11.1994 DE 9418711 U; 10.01.1995 DE 19500409
(43) Veröffentlichungstag der Anmeldung: 10.09.1997
(73) Patentinhaber: Dangschat, Rainer, Dipl.-Ing. (FH), D-85652 Pliening (DE)
(72) Erfinder: Dangschat, Rainer, Dipl.-Ing. (FH), D-85652 Pliening (DE)
(74) Vertreter: Eichstädt, Alfred, Dipl.-Ing.
(86) Internationale Anmeldenummer: PCT/EP1995/004579
(87) Internationale Veröffentlichungsnummer: WO 1996/016512

(56) Entgegenhaltungen:
- EP-A- 0 002 434
- EP-A- 0 610 700
- WO-A-93/09634
- WO-A-94/03017
- DE-A- 3 003 425
- DE-U- 9 319 049
- DE-U- 9 410 498
- US-A- 4 771 283

## Beschreibung

Die Erfindung betrifft eine fernsteuerbare Schaltungsanordnung mit einem Betriebsartenumschalter, bei dessen Betätigung das Gerät aus einer bestimmungsgemäßen Betriebsart auf die Betriebsart Bereitschaftsbetrieb umschaltet, in der mindestens ein Empfänger oder eine Steuerschaltung einer Fernbedienungssteuereinrichtung eingeschaltet ist.

Ein fernsteuerbares nachrichtentechnisches Gerät, im speziellen Fernsehempfangsgerät, das über einen Fernbedienungsgeber steuerbar ist, ist aus der DE 32 31 581 C2 bekannt. Der darin beschriebene Fernsehempfänger weist einen Mikroprozessor auf, welcher als Zeitschaltuhr geschaltet ist. Der Mikroprozessor bewirkt, daß der Fernsehempfänger nach einer bestimmten Zeit im Standby-Betrieb völlig ausgeschaltet wird. Zum Ausschalten des Gerätes ist zweckmäßigerweise der Netzschalter mit einer Magnetwicklung versehen, die mit einem Stromimpuls beaufschlagt wird oder kurzzeitig die Stromzufuhr bei entsprechender Schaltungsauslegung kurzzeitig unterbricht, so daß der Schalter in die Ruheposition zurückspringt. Mit dieser Schaltung soll erreicht werden, daß der Fernsehempfänger nicht ständig im Standby-Betrieb betrieben wird, um jegliches Sicherheitsrisiko auszuschließen. Ferner soll durch diese Maßnahme auch Energie eingespart werden.

Aus der DE 30 45 715 C2 ist ein fernsteuerbares nachrichtentechnisches Gerät, insbesondere Rundfunk- oder Fernsehempfangsgerät, bekannt, das im Netzstromkreis ein Netzrelais aufweist, das mittels eines Fernbedienungssignals von einem Fernbedienungsgeber über einen Fernbedienungsempfänger ein- bzw. ausschaltbar ist. Der Fernbedienungsempfänger wird dabei bei abgeschaltetem Betrieb des Gerätes von einer Akkumulatorzelle gespeist.

Die Schaltung und der Netzschalter im Netzstromkreis sollen dabei so ausgebildet sein, daß das Gerät sowohl über die Fernsteuerung als auch über den Netzschalter ein- und abschaltbar ist. Ist das Gerät über den Netzschalter abgeschaltet, soll darüber hinaus auch der Fernbedienungsempfänger von der Netzstromquelle abgeschaltet sein. Zur Lösung der Aufgabe ist beim Stand der Technik angegeben, daß dem Netzrelais ein zweipoliger Ein/Ausschalter als Netzschalter vorgeschaltet ist, welcher mit einem Überholschalter, mindestens einen Wischkontakt oder Tastenkontakt aufweisend, gekoppelt ist, der eine Selbsthaltefunktion des Netzschalters über den an die Akkumulatorzelle angeschlossenen Fernbedienungsempfänger einleitet. Damit nun ein Wiedereinschalten bei Betätigung des Netzschalters möglich ist, wird mittels des Überholschalters ein kurzzeitiges Signal an den Fernbedienungsempfänqer gegeben, so daß dieser über mindestens einen elektronischen Schalter das Netzrelais einschaltet oder aber es wird über die Überholschaltung ein Haltestrom kurzzeitig an die Erregerspule des Relais gelegt, wobei dann der Haltestrom mit Anlaufen des Netzgerätes von diesem sichergestellt ist. Im Unterschied zu der Schaltung gemäß der erstgenannten Druckschrift ist hier ein Wiedereinschalten mittels des Fernbedienungsgebers möglich, auch dann, wenn das Gerät durch die Relaiskontakte völlig vom Netz abgeschaltet ist. Ebenfalls ist in dieser Schrift angeregt, einen Netzschalter mit Auslösemagnet zu versehen, über den das Stromversorgungsnetz an- bzw. abschaltbar ist.

Weiterhin ist aus der DE 40 21 386 C2 ein Fernsehempfangsgerät mit einem Betriebsartenumschalter bekannt, bei dessen Betätigung das Fernsehgerät von der Betriebsart Fernsehbetrieb auf die Betriebsart Bereitschaftsbetrieb umschaltet, bei welchem die Empfangsschaltung und Orignalverarbeitungsschaltung sowie die Bildröhrenansteuerung vom Netzteil getrennt sind.

Dieses Gerät ist über einen Fernbedienungsgeber steuerbar und weist hierzu einen Fernbedienungsempfänger auf, der zumindest in den Betriebsarten Bereitschaftsbetrieb oder Fernsehempfangsbetrieb eingeschaltet ist und von dem vom Fernbedienungsgeber drahtgebunden oder drahtlos übertragene elektrische Funktionssignale steuerbar sind. Die Steuerung kann auch über die Ortsbedienung am Fernsehempfangsgerät erfolgen. Die Befehlssignale dienen zur Steuerung der einzelnen Schaltungen des Fernsehgerätechassis und des Betriebsartenumschalters. Diese Schaltung soll dabei mit einer zusätzlichen Funktion ausgestattet sein, die es dem Zuschauer ermöglicht, das Fernsehgerät dahingehend zu progrannieren, daß es automatisch oder unabhängig von der Sendedauer eines ausgewählten Programms abschaltet, wenn dies vom Zuschauer gewünscht wird und es im anderen Fall dem Zuschauer ermöglicht, den Einschaltzustand während einer bestimmten Zeit aufrechtzuerhalten, ohne daß durch diese zusätzliche Funktion der normale Fernsehempfangsbetrieb und das An- und Abschalten des Gerätes aus dem Standby-Betrieb in den Normalbetrieb beeinträchtigt werden.

Entsprechend ist mit dem Fernsteuerempfänger eine Zeitgeberschaltung verbunden, die in Abhängigkeit von einem vom Fernbedienungsgeber und/oder von der Ortsbedienung am Fernsehempfangsgerät empfangenen Funktionssteuersignals oder von einem beim Einschalten des Gerätes generierten Signals startet und mit Ablauf eines fest eingestellten Zeitfensters oder eines programmierbaren Zeitfensters ein Umschaltsteuersignal an den Betriebsartenschalter ausgibt, der in Abhängigkeit vom Anliegen des Umschaltsteuersignals von Fernsehbetrieb auf Bereitschaftsbetrieb umschaltet. Die Zeitgeberschaltung kann dabei eine Rücksetzsteuerschaltung aufweisen, die in Abhängigkeit von einem vom Fernbedienungsgeber oder von der Ortsbedienung ausgegebenen und von der Fernsteuerempfängerschaltung empfangenen Funktionssteuersignal innerhalb des Zeitfensters aktivierbar ist und die Zeitgeberschaltung zurücksetzt. Die Zeitgeberschaltung startet nach dem Zurücksetzen automatisch wieder. Vor Ablauf des Zeitfensters erfolgt dabei eine visuelle Anzeige, so daß ein Rücksetzen möglich ist, ohne die normale Betriebsart zu verlassen und auf die Betriebsart Bereitschaft umzuschalten. Weiterhin ist in dieser Druckschrift vorgeschlagen, daß mit Ablauf eines zweiten Zeitfensters das Gerät gänzlich vom Stromversorgungsnetz abgeschaltet wird.

Die Vorteile, die ein gänzliches Abschalten eines technischen Gerätes vom Stromversorgungsnetz bieten, liegen auf der Hand. Zum einen wird durch das Gerät selbst keinerlei Energie aufgenommen, zum anderen ist eine erhöhte Sicherheit gegeben, da an Schaltungsbauteilen des nachrichtentechnischen Gerätes keine Netzspannung anliegt. Ferner erfolgt auch keine Energieaufnahme durch eine über das Stromversorgungsnetz gespeiste Betriebsbereitschaftsschaltung mit einem entsprechenden Fernbedienungsempfänger. Bei solchen Geräten, die ein in den Bereitschaftsbetrieb umschaltbares Schaltnetzteil aufweisen, ist eine relativ hohe Energieaufnahme im Bereitschaftsbetriebszustand gegeben, ferner können bei bestimmten Schaltnetzteilen im Bereitschaftsbetrieb höhere Leerlaufspannungen die Sicherheit einzelner Bauelemente gefährden.

Die Bedienung von nachrichtentechnischen Geräten mittels Fernbedienung ist weit verbreitet. Sie bietet dem Benutzer hohen Bedienungskomfort und Bequemlichkeit. Er kann von einem entfernten Sitzplatz zum nachrichtentechnischen Gerät von einem Sender auf den anderen umschalten, im Falle des Empfangs von Bild-/Videosignalen mittels eines Fernsehempfänger das Bild verändern und beeinflussen und die Lautstärke verändern, Videotext nutzen, im Falle von VCR-Geräten die Bandaufzeichnung steuern usw. Die Bedienungsmöglichkeiten der verschiedenen nachrichtentechnischen Geräte, wie sie insbesondere in der Unterhaltungselektronik gebaut und angeboten werden, sind hinlänglich bekannt.

Aus der DE 30 03 425 A1 ist weiterhin eine Einrichtung für die Steuerung von mehreren Komponenten einer Rundfunkempfangs- und/oder -wiedergabeanlage bekannt, bei der alle Komponenten durch eine Steuerinformationsübertragungstrecke miteinander und mit einer zentralen Steuereinrichtung verbunden sind, die einen Netzschalter aufweist, mit dem alle Komponenten gleichzeitig vom Netz getrennt werden können. Die Steuereinrichtung weist in weiterer Ausgestaltung einen Mikroprozessor auf und kann von einem Fernbedienugsgeber gesteuert werden, zu'welchem Zweck Informationsübertragungsstrecken zwischen den einzelnen Komponenten und der Steuereinrichtung vorgesehen sind. Die Steuerzentrale weist mehrere Steckdosen auf, in die Stecker von Netzkabeln der einzelnen Komponenten zur Stromversorgung eingesetzt werden können. Zum Anschalten der Ausgänge sind in der Steuerzentrale Netzrelais vorgesehen, welche die einzelnen Komponenten an die Netzspannung legen. Die Netzspannung wird über den Netzstecker an die Steuerzentrale gelegt, die die Netzspanung dann über die steuerbaren Relais an Hilfssteckdosen legt, in die die einzelenen Stecker der Komponenten eingeführt sind. Die Steuerzentrale kann auch eine programmierbare Schaltuhr aufweisen, die funktionsmäßig einem sogenannten Timer entspricht, der bei modernen HIFI-Türmen oftmals in den einzelnen Komponenten vorgesehen ist. Das Anschalten der Komponenten kann gleichzeitig aber auch funktionsmäßig erfolgen. Eine Trennung ist auch funktionsmäßig von den einzelnen Komponenten vorgesehen. Über die Art und Weise der Fernbedienungssteuerung und der Ausbildung des Fernbedienungsgebers sind der Schrift keine näheren Ausführungen zu entnehmen.

Aus der EP 0 610 700 A1 ist ein Gerät der Unterhaltungselektronik als nachrichtentechnisches Gerät mit netzgespeistem Standby-Betrieb als Bereitschaftsbetrieb und einem Normalbetrieb bekannt, zwischen denen über einen Fernbedienungsempfänger umgeschaltet werden kann. Während des Standby-Betriebes ist das Gerät in der Lage, einen von einer Fernbedieneinheit gesendeten Befehl zu erkennen und das Gerät in den Normalbetrieb einzuschalten. Aus dem Bereitschaftsbetrieb kann darüber hinaus das Gerät in eine dritte Betriebsart umgeschaltet werden, in der nur der Fernbedienungsempfänger und ein an dessen Ausgang angeschlossenes Filter mit Betriebsspannung versorgt werden, während die Auswerteschaltung und ggf. die nachgeschalteten Steuerschaltungen vom Stromversorgungsnetz abgeschaltet sind. Die Abschaltung der einzelnen Funktionsschaltungen von dem Stromversorgungsnetz erfolgt dabei mittels gesonderter Schalter, die von dem Infrarotempfänger gesteuert werden. In einer weiteren Ausgestaltung ist vorgesehen, daß während des Standby-Betriebes und des Öko-Betriebes das Gerät vom Netz vollkommen abgeschaltet werden kann. Dann versorgt eine Batterie den Fernbedienungsempfänger und das angeschlossene Filter, um empfangene Signale detektieren zu können, um dann die Anschaltung wieder vornehmen zu können, wenn der Netzschalter eingeschaltet ist. Der Netzschalter ist ein handbetätigter Schalter, der am Gerät sitzt und nur durch Betätigung am Gerät selbst ein- und ausgeschaltet werden kann. Bei Anwendung der Schaltung in einem VCR-Gerät kann darüber hinaus im Timer-Modus das VCR-Gerät über die Öko-Logik, die diese Umschaltungen über gesonderte Schalter bewirkt, in Verbindung mit der Uhr und dem Timer-Prozessor in den eingeschränkten Öko-Betrieb umgeschaltet werden, in dem der Empfänger nur noch von der zusätzlichen Batterie betrieben wird. Ferner ist bei einem Videorecorder ein Bedienmittel zum wahlweise Einschalten einer weiteren Betriebsart vorgesehen, in der nur die Übergangsschaltung und eine Zeitsteuereinheit aktivierbar sind, wobei manuell auslösbare Schaltmittel zum Rücksprung in den Normalbetrieb vorgesehen sind. Das Betriebsmittel ist dabei am Gerät selbst vorgesehen. Darüber hinaus ist in bekannter Weise eine Zeitschaltuhr im VCR-Gerät vorgesehen, um darüber zeitgesteuerte Aufnahmen zu ermöglichen. Diese Druckschrift gibt keine Anregung, den Netzschalter fernbedienbar auszugestalten. Sie gibt weiterhin keine Anregung, dann, wenn in den normalen Bereitschaftsbetrieb oder in den sog. Öko-Betrieb umgeschaltet ist, ein automatisches Abschalten zu bewirken.

Weiterhin ist aus der DE 93 19 049.2 U eine Systemsteuerung zur Reduzierung des Energieverbrauchs von elektronischen Geräten im Standby-Betrieb bekannt, bei dem zwei Zeitglieder durch Betätigung einer Taste auf der Fernbedienung unabhängig voneinander angestoßen werden, wobei das erste Zeitglied die Steuerelektronik in dem elektronischen Gerät gegen Störsignale sperrt und eine kürzere Laufzeit gegenüber dem zweiten Zeitglied hat, welches für den Fall, daß ein Fernbedienungssignal noch anliegt, mit Ablauf des Zeitfensters die Abschaltung des Gerätes vom Netz steuert. Ein individuelles Abschalten vom Standby-Betrieb mittels eines weiteren Fernsteuerbefehls ist dabei nicht möglich. Vielmehr muß ein Umschaltbefehl längere Zeit eingegeben werden, wobei nur bei Anliegen eines entsprechend lang gesendeten Befehls bzw. dessen fortwährender Wiederholung zum Schluß eines Zeitfensters der AUS-Befehel ausgegeben wird.

Der Erfindung liegt die Aufgabe zugrunde, unter Beibehaltung des gewohnten hohen Bedienkomforts mittels einer Fernbedienung einen Verbraucher vom Netz trennen zu können - wenn dieses gewünscht ist -, den elektrischen Verbraucher also vollständig von dem Stromversorgungsnetz abzuschalten oder aber den Betriebsbereitschaftszustand aufrecht zu erhalten unter Angabe geeigneter Fernbedienungsgeber und -funktionen. Eine weitere Teilaufgabe besteht darin, bei Wahrung dieses Arbeitsprinzips mehrere Verbraucher wahlweise in gleicher Weise steuern zu können. Ein weiteres Ziel der Erfindung ist es, ergänzend auch eine automatische Abschaltung aus dem Standby-Betrieb vorzusehen.

Die Erfindung löst die Aufgabe durch eine Schaltungsanordnung mit den im Anspruch 1 angegebenen Merkmalen.

Vorteilhafte Weiterbildungen der Erfindung sind in den Unteransprüchen im einzelnen angegeben.

Gemäß der Lehre der Erfindung soll mittels der fernsteuerbaren Schaltungsanordnung mindestens ein eingeschalteter Verbraucher von der Stromversorgungsquelle abschaltbar sein. Dies soll indirekt durchgeführt werden und zwar soll zunächst aus einer normalen Betriebsart in eine Standby-Betriebsart umgeschaltet werden können und aus dieser Bereitschaftsbetriebsart in den Aus-Zustand. Wenn die Schaltung diese Voraussetzungen erfüllt, soll darüber hinaus die Trennschaltung direkt von der Stromversorgungsquelle bzw. vom Netz aus steuerbar sein, wobei durch einen AUS-Befehl vom Fernbedienungsgeber der Trennschalter die Stromversorgungsquelle von dem versorgten Verbraucher abschaltet. Der Trennschalter ist darüber hinaus auch von einem Betätigungselement am Verbraucher selbst in gewohnter Weise ein- und abschaltbar. Im Sinne der Erfindung ist als elektrischer Stromverbraucher eine geschlossene elektrische Schaltungseinheit oder ein ohmscher Widerstand zu verstehen, der über einen Trennschalter an die Stromversorgungsquelle anschaltbar und wieder abschaltbar ist. Dieser Schaltungseinheit kann ein Standby-Netzteil zugeordnet sein, das den Fernbedienungsempfänger und die Fernbedienungssteuereinrichtung mit Strom versorgt, um darüber Trennschalter im Sinne der Erfindung zu steuern. Die Erfindung läßt es aber ebenso zu, eine Vielzahl von angeschlossenen elektrischen Verbrauchern individuell oder gemeinsam in gleicher Weise zu steuern. Dazu kann ein Muttergerät verwendet werden, an das verschiedene andere Geräte oder ohmsche Verbraucher mittels Steckverbinder angesteckt werden können, über die die Stromversorgung hergestellt wird. Zu diesem Zweck kann das Muttergerät am Ausgang verschiedene Steckdosen aufweisen, in die die Stecker der Stromversorgungsleitungen der angeschlossenen Geräte eingeführt werden. Es ist darüber hinaus gemäß der Erfindung möglich, eine Schaltungsanordnung in ein Adaptergerät unterzubringen, das die Schaltfunktionen steuert, wobei die einzelnen Komponenten über einzelne Trennschalter individuell oder alle gemeinsam an- und abgeschaltet werden können. Ein solches Zusatzgerät ist universell einsetzbar, z. B. zur Steuerung von Lampen.

Die Erfindung ist ferner besonders geeigent für den Einsatz in nachrichtentechnischen Geräten wie sie im Anspruch 4 angegeben sind. Ist beispielsweise eine Schaltung nach der Erfindung in einem Satellitenempfänger oder in einem Settopkonverter eingebaut, so muß dieses Gerät selbstverständlich eine entsprechende Anzahl von Ausgängen aufweisen, über die die angeschalteten Geräte individuell mit Strom versorgt werden können. Dies können z. B. ein Fernsehempfangsgerät und/oder ein Videorecorder, ein Computer, ein elektronisches Spielgerät, ein HIFI-Gerät usw. sein. Wird nun der Netzschalter des Gerätes eingeschaltet, der ein manuell betätigbarer Schalter ist und sich am Muttergerät befindet, so sind die angeschlossenen Geräte ebenfalls an die Netzspannung gelegt und können bestimmungsgemäß betrieben werden. Es ist aber auch möglich, in die Zuleitungen der Netzstromausgänge Trennschalter vorzusehen, die von der Fernbedienungssteuereinrichtung, die in dem Muttergerät mit integriert ist, einzeln angesteuert werden, um wahlweise die Netzspannung z. B. an das Fernsehgerät oder an den angeschlossenen Videorecorder zu legen.

Die Erfindung sieht nun eine spezielle Art der Abschaltung der einzelnen Komponenten bzw. Verbraucher von der Netzstromquelle vor, einschließlich der Abschaltung des Muttergerätes. Dies erfolgt in der Weise, daß beim Auslösen eines den einzelnen Verbrauchern zugeordneten Steuerbefehls diese zunächst aus dem normalen Betrieb in den Standby-Betrieb umgeschaltet werden, z. B. durch Aufrechterhaltung einer Mindestspannung ohne Netztrennung, um z. B. die Fernbedienungssteuereinrichtung aktiv zu halten, während die Ausgänge der Stromversorgung über die Trennschalter bereits abgeschaltet sind. Die Stromverbrauchsschaltungen des Muttergerätes sind ebenfalls in den Standby-Betrieb geschaltet. Nach einer gewissen Zeit erfolgt dann automatisch eine Netztrennung, diese kann aber auch durch Eingeben eines zusätzlichen AUS-Befehls unmittelbar bewirkt werden. Der Benutzer hat also die Möglichkeit, das angeschlossene Muttergerät und/oder die angeschlossenen weiteren Stromverbraucher einzeln oder gemeinsam aus dem Betriebszustand in den Standby-Zustand und in den Aus-Zustand zu schalten, in welchem eine Netztrennung des Gerätes gegeben ist.

Die Erfindung ist nicht nur auf alle nachrichtentechnische Geräte anwendbar, die die Umschaltmöglichkeiten aus dem normalen Betrieb in den Standby-Betrieb und die Umschaltung in den AUS-Betrieb ermöglichen. Dies kann sowohl durch ein Netzrelais mit Arbeitskontakten im Stromkreis als auch über einen Schalter erfolgen, der mit einem Magnetschalter gekoppelt ist, derart, daß der Netzschalter öffnet, wenn ein AUS-Signal an die Spule gelegt bzw. ein Erregerstrom unterbrochen wird. Dies hängt jeweils von der Ausführungsform des Netzschalters ab. Die Steuerung des Gerätes erfolgt also ausschließlich über die Fernbedienung in bezug auf die Umschaltung im Bereitschaftsbetrieb oder die wahlweise oder ergänzende Umschaltung im AUS-Betrieb. Dazu ist eine zusätzliche Funktionssteuerung auf dem Fernbedienungsgeber vorgesehen, so daß bei Betätigung der entsprechend zugeordneten Taste oder des Funktionsstellers ein Steuerbefehl übertragen wird, der von der Empfängerschaltung ausgewertet wird, in dem Sinne, daß das Gerät wahlweise umschaltet oder aber auch gänzlich vom Stromversorgungsnetz abschaltet. Im Falle, daß kein Fernbedienungsempfänger mit eigener Stromversorgung, z.B. einem Akkumulator oder einer Batterie, vorgesehen ist, ist die Wiedereinschaltung nur möglich, wenn der Netzstromschalter per Hand bedient wird. Ist hingegen ein Fernbedienungsempfänger vorgesehen, der eine eigene Stromversorgung aufweist, also vom Netz unabhängige Stromversorgung, so kann bei entsprechender Auslegung der Schaltung, wie dies-beispielsweise in der DE 30 45 715 C2 angegeben ist, eine Einschaltung über die Ausgabe eines Einschaltbefehls erfolgen. Entscheidend ist, daß selbst dann, wenn eine Schaltuhrfunktion zum Abschalten des Gerätes führt, wie dies im Anspruch angegeben ist, alle Funktionen in den Fernbedienungsgeber verlagert werden und das angesteuerte Gerät nur noch in Abhängigkeit des übertragenen Schaltbefehls entweder in den Standby-Betrieb umschaltet oder aus dem Standby-Betrieb in den AUS-Zustand oder alternativ aus dem normalen Betriebszustand sofort in den AUS-Zustand umschaltet. Der Benutzer hat also die Möglichkeit, den Betriebszustand außerhalb des normalen Betriebszustandes seines Gerätes frei zu bestimmen. Dieses ist durch Betätigung entsprechender Funktionsstellelemente auf den Fernbedienungsgeber möglich, die separat angeordnet sind oder aber auch in Doppelfunktion in eine Taste integriert sind, wie dies im einzelnen in den Ansprüchen angegeben ist. Darüber hinaus kann aber auch eine Zeitschaltung in den Fernbedienungsgeber mit integriert sein, wie sie beispielsweise aus der DE 32 31 581 C2 auf der Empfängerseite bekannt ist.

Die angegebene Ansteuerung des Gerätes zum völligen Ausschalten kann in kinematischer Umkehr aber auch für das Wiedereinschalten dann eingesetzt werden, wenn der Fernsteuerempfänger auch in Betrieb bleibt, wenn das Gerät vom Stromversorgungsnetz getrennt ist und der verwendete Netzschalter ein von dem Fernsteuerempfänger wieder einschaltbarer Schalter ist. Hierzu eignen sich beispielsweise gesteuerte Halbleiterschalter, wie Triacs, Transistoren und Thyristor mit entsprechend gekoppelten Ansteuerschaltungen. Schalter der angesprochenen Art, aber auch steuerbare Stabilisatorschaltungen, wie Schaltnetzteile, können darüber hinaus so ausgelegt sein, daß sie die Geräteschaltungen in verschiedene Betriebsarten umschalten. Die Betriebsspannungen werden sekundärseitig von solchen Schaltern ab- bzw. eingeschaltet oder aber von einem hohen Betriebsspannungsniveau auf ein solches abgesenkt, das ein Betreiben der Schaltungen nur im Standby-Betrieb möglich ist.

Anstelle der angegebenen Ansteuerung mittels Funktionsschaltelemente am Fernbedienungsgeber bzw. dort vorgesehener Tasten kann aber auch eine Befehlseingabe mittels Mikrofon in den Fernbedienungsgeber erfolgen. Der Sprachanalysator analysiert die Umschalt-, EIN- und AUS-Befehle und gibt entsprechende Wortbefehle addiert an das zu steuernde Gerät aus. Zum Zwecke der Realisierung kann z.B. auf eine Fernsteuerung gemäß der DE 27 55 633 C2 zurückgegriffen werden. Daß neben dem Mikrofon, das mit dem Fernbedienungsgeber verbunden sein kann, oder aber auch in diesem fest eingebaut sein kann, noch Funktionstasten vorgesehen sein können, versteht sich dabei von selbst.

Das zweistufige Wiedereinschalten des Gerätes, nämlich aus dem vom Stromversorgungsnetz getrennten Zustand in den Standby-Zustand und aus diesem in den Betriebszustand durch längeres Drücken der Fernbedienungstaste "EIN" oder durch wiederholtes Drücken der "EIN"-Taste oder durch Betätigen zweier oder mehrerer Tasten aufeinanderfolgend, stellt zudem sicher, daß ein unbeabsichtigtes Einschalten vermieden wird. Anstelle einer separaten "EIN"-Taste bzw. einer entsprechend generierten Funktion mittels eines Einstellelementes kann auch die "AUS"-Taste hierfür verwendet werden; der Empfänger muß dann den "AUS"-Befehl nur als "EIN"-Befehl interpretieren, wenn das Gerät abgeschaltet ist. Dies bietet eine erhöhte Sicherheit. Insbesondere ist es auch möglich, beim Wiedereinschalten dafür Sorge zu tragen, daß der EIN-Befehl in den Standby-Betrieb zwar ausgewertet aber nicht zum Abschalten herangezogen wird, sondern nur in Verbindung mit dem folgenden Einschaltbefehl, der nur so interpretiert wird, daß bei Vorliegen beider Befehle das Gerät erst einschaltet.

Die Integration der elektrischen Funktion gemäß der Erfindung in ein Gerät der Nachrichtentechnik, z. B. in einen Satellitenempfänger, Settopkonverter, Videorecorder oder in ein anderes unterhaltungselektronisches Gerät, stellt eine sehr wirtschaftliche Lösung dar, da in diesem bereits ein Netzteil, ein Mikroprozessor und Infrarotoder ein anderer Fernbedienungsempfänger vorhanden ist, ebenso eine Fernbedienungssteuereinrichtung, wobei der Mikroprozessor Bestandteil dieser Einrichtung sein kann. Zusätzlich ist nur die Magnetspule auf dem gemeinsamen Netzschalter des Gerätes vorzusehen, über den auch die Zusatzgeräte von dem Stromversorgungsnetz abgeschaltet werden können. Anstelle eines solchen Netzschalters kann aber auch ein herkömmliches, den Anforderungen entsprechend ausgelegtes Relais vorgesehen sein, ebenso eine elektronische Schaltung, z. B. eine Thyristorschaltung. Wird die Funktion in ein separates Gehäuse als ein Beistellgerät integriert, so ist es erforderlich, daß der Fernbedienungsempfänger die Befehlsworte versteht, die von einem zugehörigen, zur Steuerung der Funktion eines Gerätes vorhandenen Fernbedienungsgeber empfangen werden. Für die für die Funktionsteuerung zum Ein- und Abschalten bzw. Umschalten in den Standby-Betrieb erforderlichen Fernbedienungscodierungen bzw. -befehle müssen entweder ein entsprechender Satz, Vergleichsworte bzw. Befehle in einem Speicher abgelegt werden, bzw. ROM-resident bereits vorhanden sein, oder die Fernbedienungssteuereinrichtung muß als lernfähiger Fernbedienungsempfänger ausgelegt sein, damit sie die Befehle eines bestimmten Fernbedienungsgebers, der zur Anwendung kommen soll, versteht, um die gewünschten Ein-, Aus- und Umschaltfunktionen ausführen zu können. Zu diesem Zweck ist beispielsweise ein Lernprogramm ROM-resident vorhanden und ein Umschalter oder eine Programmiertaste vorgesehen, bei deren Betätigung der Mikroprozessor der Fernbedienungssteuereinrichtung auf Lernen umschaltet, so daß die von einem empfangenen Fernbedienungsgeber abgegebenen Umschalt- und Ausschaltbefehle detektiert werden können. Die detektierten Befehle werden im Speicher zum Zwecke des späteren Vergleichs abgespeichert. Bei Verwendung einer Programmiertaste kann dabei vorgesehen sein, daß diese niedergedrückt gehalten werden muß bis der Identifikationsablauf und der Speichervorgang abgeschlossen sind.

Nach abgeschlossenem Lernprogramm wird der Umschalter bzw. die Taste wieder betätigt, so daß beim Empfang von Umschaltbefehlen vom Fernbedienungsgeber diese ausgeführt werden und die stufenweise Trennung vom Netz erfolgt, wenn diese gewünscht ist.

Wird die Schaltung in ein gesondertes Gerät oder in einem Muttergerät integriert, mit dem es möglich ist, die einzelnen Ausgänge gesondert zu steuern, beispielsweise um ein Fernsehgerät, CD-Player, Videorecorder oder eine HIFI-Anlage gesondert an eine gemeinsame Stromversorgungsquelle schalten oder von dieser abschalten zu können, versteht es sich von selbst, daß bei unterschiedlichen Fernbedienungssystemen die einzelnen Befehle dieser Systeme erlernt und abgespeichert werden müssen, damit die Trennschalter von der Fernbedienungssteuereinrichtung bei Betätigen eines der Fenbedienungsgeber den entsprechenden Befehl des bestimmten Gerätes auswerten kann. Die Funktion soll beispielsweise anhand eines Satellitenempfängers erläutert werden. Der Satellitenempfänger dient dabei zugleich als Energieverteilzentralgerät. Es enthält einen Magnettrennschalter, der ferngesteuert das Gerät vom Netz trennt und nur manuell wieder eingeschaltet werden kann, und weiterhin mehrere Ausgangssteckdosen für die Stromversorgung von Tochtergeräten, die angeschlossen werden können. Die Software des Mikroprozessors der Fernbedienungssteuereinrichtung muß derart ausgelegt sein, daß sie, wie bei der Standby-Ausschaltautomatik im Fernsehgerät oder wie beim Zusatzgerät, sowohl einen beispielsweise 3-Stunden-Timer als auch eine Unterscheidungsfunktion für Standby- und Totalabschaltung besitzt. Die beschriebene Lernfähigkeit sollte dabei ebenfalls gegeben sein, damit das Abschalten auch mit der Fernbedienung des Fernsehgerätes durchgeführt werden kann. Der Benutzer kann in gewohnter Weise mit der Fernbedienung das Fernsehgerät steuern. Durch normales Drücken der AUS-Taste schaltet der Fernseher in Standby. Ein langes oder doppeltes Drücken wird im Satellitenempfänger als AUS dekodiert und schaltet per Magnetschalter alle Steckdosen für die Tochtergeräte ab, also auch den Fernseher. Um das Gerät wieder in Betrieb zu nehmen, ist es erforderlich, den Netzschalter des Satellitenempfängers per Hand zu bedienen, so daß alle Geräte, einschließlich der Tochtergeräte, eingeschaltet werden. Sollten die Geräte noch gesonderte Netzschalter aufweisen, so müssen diese selbstverständlich eingeschaltet sein, um eine zentrale Steuerung durchführen zu können.

Wird die Schaltung in einem Videorecorder intergriert, so kann die Software so ausgelegt sein, daß sie bei Erhalt des AUS-Befehls erst abfragt, ob der Timer des Videorecorders aktiviert ist, d. h. eine Aufzeichnung vorprogrammiert ist. In diesem Fall verbleibt der Videorecorder im Standby-Betrieb und nur die Steckdosen für Fernseher, Set-Top-Konverter und Stereoanlage werden abgeschaltet. arbeitet der Videorecorder mit einem Satellitenempfänger zusammen, so ist auch dies entsprechend zu berücksichtigen. Ist der Timer nicht aktiviert, so werden alle angeschlossenen Geräte vom Netz getrennt. Ein Fernsehgerät, das bereits die integrierte automatische und manuelle Standby-Abschaltung enthält, braucht nur noch die geschalteten Ausgangssteckdosen für die Tochtergeräte aufzuweisen.

Unter Anwendung der Erfindung eröffnen sich für den Fachmann verschiedene Gestaltungs- und Einsatzmöglichkeiten. In allen Fällen ist es durch entsprechende Programmierung des Mikroprozessors der Fernbedienungssteuereinrichtung möglich, in gewünschter Weise die Abschaltung einzelner Komponenten oder aller Komponenten gemeinsam von der Stromversorgungsquelle zu ermöglichen.

Der Betriebszustand Standby eines Gerätes kann auf einfache Weise durch Leistungs-, Strom- und/oder Spannungsabfallmessung in der Stromversorgungszuleitung erfolgen. Durch Auswertung dieses Zustandes kann sodann ein Timer aktiviert werden, der die Abschaltung nach bestimmter Zeit automatisch vornimmt. Dadurch ist eine weitere Sicherheit gegeben, ferner ist kein Bussystem zwischen der Schaltung und den Geräten für die Steuerung der Umschaltbefehle erforderlich.

Die Erfindung wird nachfolgend anhand der in den Zeichnungen dargestellten Ausführungsbeispiele ergänzend erläutert.

In den Zeichnungen zeigen:
- Fig. 1: ein Blockschaltbild der Schaltungsanordnung, wie sie in einem Fernsehempfänger vorgesehen ist,
- Fig. 2a, 2b, 2c: verschiedene Ausführungen von Fernbedienungsgebern
- Fig. 3: zeigt in Form eines Blockschaltbildes eine Variante der Schaltung nach Fig. 1 in Form eines externen Zusatzgerätes, an das verschiedene Geräte anschließbar sind und die über einen gemeinsamen Netzschalter von der Eingangsstromquelle, dem Netz, abschaltbar sind,
- Fig. 4a, 4b: einen Fernsehempfänger in Seiten- und Vorderansicht mit einem angesteckten externen Gerät gemäß Figur 3 und
- Fig 5a, 5b, 5c: ein externes Gerät als Einzelgerät.

In dem Blockschaltbild ist beispielhaft ein TV-Chassis 2 angegeben, das von mehreren Betriebsspannungen versorgt wird, die aus einem Schaltnetzgerät 1 abgegriffen werden. Dieses Schaltnetzteil 1 ist über einen Netzschalter 4 mit dem Stromversorgungsnetz im Hausbereich verbunden. Der Netzschalter ist mit einer magnetischen Auslösevorrichtung gekoppelt, die durch die Magnetspule 4a symbolisch eingezeichnet ist. Diese Auslösevorrichtung wird wirksam, wenn ein AUS-Befehl vom Fernbedienungsgeber 9 bzw. Fernbedienungsgeber 11 durch Betätigen der dort vorgesehenen zugeordneten Taste 10 bzw. Tasten 12 oder 13 oder bei Betätigung beider Tasten anliegt. Zur Steuerung ist das Gerät ferner mit einem Fernbedienungsempfänger 8 ausgestattet, in diesem Falle einem Infrarotlichtfernbedienungsempfänger bekannter Art. Die Befehle liegen mit einem Infrarotlichtträger moduliert an und werden von der dort eingezeichneten Diode in elektrische Signale umgesetzt, die im Empfänger aufbereitet und decodiert werden. Die decodierten Signale werden dem Mikroprozessor 5 zur Auswertung zugeführt, der in Abhängigkeit von den Funktionsstellbefehlen entsprechende Funktionen steuert. Im Falle der Betätigung der Taste 10 wird die Umschaltung des TV-Chassis auf Standby-Betrieb steuert, zu welchem Zweck das Relais 3 derart gesteuert wird, daß die Kontakte die eingezeichnete offene Stellung einnehmen. In diesem Zustand ist das komplette Gerät auf Betriebsbereitschaft geschaltet, d.h. das TV-Chassis 2 von dem Netzgerät 1 getrennt. Von dem Netzgerät 1 liegt jedoch eine Versorgungsspannung an den Mikroprozessor der Fernbedienungssteuereinrichtung und der Magnetspule an. Die Steuerung der Magnetspule des Netzschalters 4 erfolgt durch Ansteuerung des Transistors 6. Die Steuerung der Magnetspule 3 des Relais durch den Schalttransistor 7. Die Schaltung funktioniert wie folgt:

Durch Betätigen des Netzschalters 4 am Gerät selbst werden die Schaltungen 1, 2, 5 und die weiterhin angegebenen Schaltungen über das Stromversorgungsnetz z.B. 230 V--Stromversorgungsnetz, mit Strom versorgt. Im Standby-Betrieb arbeiten zweckmäßigerweise nur die Baugruppen: Fernbedienungssteuereinrichtung 5 und Fernbedienungsempfänger 8, die z.B. aus dem Netzteil 1 (5 V) versorgt werden. Sind die Kontakte des Relais 3 geschlossen, so bedeutet dies normaler Betrieb. Das TV-Chassis 2 ist an die erforderlichen Betriebsspannungen angeschaltet. Dies erfolgt nach Decodierung eines Einschaltbefehls z.B. bei Betätigen einer Einschalttaste am Fernbedienungsgeber 9 oder 11 die nicht eingezeichnet ist, oder bei Betätigen einer Programmwahltaste, bei deren Betätigung von der Schaltung des Fernbedienungsgebers, z.B. einem Prozessor, ein Einschaltbefehl mit generiert wird. Nach Decodierung des Einschaltbefehls schaltet der Mikrocomputer 5 des Empfängers über einen Verstärker 7 das Relais 3 ein, das die Betriebsspannungen an das Chassis 2 anschaltet. Die Betriebsspannungen sind mit U1, U2 und U3 angegeben. Das Gerät ist also in den normalen Betriebszustand Fernsehbetrieb geschaltet. Das angegebene Relais 3 kann selbstverständlich auch durch eine steuerbare Stabilisatorschaltung, z.B. ein Schaltnetzteil, ersetzt werden, das von einer normalen Betriebsart in den Standby-Betrieb umschaltbar ist. Ebenso können anstelle eines elektromechanischen Relais auch andere elektronische Halbleiterschalter, wie Transistoren, Triacs, Thyristoren oder abschaltbare Stabilisatoren verwenden werden. Ein Ausschaltbefehl bewirkt, daß das Relais 3 abfällt. Das Gerät geht also in den Bereitschaftsbetrieb über. Das Gerät kann aber auch automatisch in den Standby-Betrieb umschalten. Wenn eine definierte Zeit seit dem letzten EIN-Betrieb, z.B. fünf Stunden, oder seit dem letzten Steuerbefehl, z. B. einen Programmumschaltbefehl, durch den Benutzer, z.B. 24 Stunden, vergangen ist - die Zeit ist in Abwandlung der Erfindung frei einstellbar - gibt der Fernbedienungsgeber 9 oder 10 in der einen Ausführungsform einen Steuerbefehl als AUS-Befehl an das Gerät ab. Dieser wird detektiert und bewirkt, daß die Wicklung 4a des Schalters 4 über den Verstärker bzw. Schalttransistor 6 eingeschaltet wird, wodurch eine Entriegelung betätigt wird und der Schalter in seine Ausgangsstellung zurückfällt und das gesamte Gerät vom Netz trennt. Hierdurch ist sichergestellt, daß die Geräte auch wirklich abgeschaltet werden, wenn der Benutzer z. B. in den Urlaub fährt und das "Ausschalten" vergessen hat. Natürlich kann diese Art der Steuerung auch in der Fernbedienungseinrichtung realisiert werden. Der vorhandene Prozessor muß dann nur entsprechend programmiert sein. Der Schalter kann selbstverständlich auch per Hand in seine Ruhestellung verbracht werden. Zur erneuten Inbetriebnahme des Gerätes ist eine Betätigung des Netzschalters 4 erforderlich. Der Magnetantrieb kann aber auch so ausgebildet sein, daß er ein elektrisches Wiedereinschalten ermöglicht. Dann muß allerdings der Fernbedienungsempfänger und die Auswerteschaltung beispielsweise so geschaltet sein wie dies z. B. aus der DE 30 45 715 C2 bekannt ist.

Die Bedienungsart ist gegenüber dem Stand der Technik eine völlig andere. Im Fernbedienungsgeber 9 ist z.B. eine Ein/AUS-Taste 10 vorgesehen. Diese Taste weist beim Aussschalten eine Doppelfunktion auf. Bei normaler Betätigung wirkt sie wie bisher und schaltet das Fernsehgerät vom Betrieb in den Bereitschaftsbetrieb um. Der IR-Empfänger 8 gibt das verstärkte Signal zum Mikroprozessor 5 der Fernsteuereinrichtung. Diese erkennt den Steuerbefehl als den Umschaltbefehl auf Bereitschaftsbetrieb und gibt einen entsprechenden Abschaltimpuls an den Transistor 7 aus. Die Spule der selbsthaltenden Relais 3 wird erregt, wodurch eine Umschaltung in der Weise erfolgt, daß die oben dargestellten Kontakte öffnen. Das TV-Chassis 2 ist vom Netzgerät 1 abgetrennt. Wird die Taste 10 länger als beispielsweise 3 Sekunden gedrückt, was programmäßig festgelegt wird, so erkennt dies der Mikroprozessor 5 des Fernsehgeräte als AUS-Befehl an und gibt seinerseits einen Abschaltimpuls an den Transistor 6 aus, der kurzzeitig leitend schaltet, wodurch die Magnetspule des magnetischen Antriebes des Netzschalter erregt wird und eine Mechanik betätigt, die den Schalter in die AUS-Position zurückspringen läßt. Die beiden Kontakte fallen in die dargestellte geöffnete Position. Das Gerät ist vom Netz abgetrennt und kann bei dem dort verwendeten Gerät nur wieder in Betrieb genommen werden, wenn ein Druck auf den Netzschalter ausgeübt wird. Die Pfeilrichtung oben im Druckschaltertastelement zeigt die Bewegungsrichtung.

Die Steuerung kann aber auch, wie anhand des Fernbedienungsgebers 11 ersichtlich, durch Betätigen von zwei Einzeltasten bewirkt werden. Dies kann in der Weise erfolgen, daß der Taste 12 die Funktion Standby-Betrieb bzw. Bereitschaftsbetrieb zugeordnet wird und der Taste 13 die AUS-Funktion. Es ist aber auch möglich, die AUS-Funktion erst dann zu bewirken, wenn die Tasten 12 und 13 gleichzeitig betätigt werden. Dies hängt vom jeweils implementierten Steuerprogramm im Prozessor des Fernbedienungsgebers ab. Selbstverständlich läßt sich auch ein Ausschaltbefehl anhand der Taste 10 im Fernbedienungsgeber 9 dadurch bewirken, daß zweimal kurz hintereinander ein Steuerbefehl generiert wird. Der Mikroprozessor im Fernbedienungsgeber 9 erkennt diese Befehlseingaben und wertet sie entsprechend aus und gibt einen Steuerbefehl an den IR-Empfänger 8 ab, der das demodulierte Signal dem Mikroprozessor 5 zur Auswertung zuführt, um die gewünschte Steuerung zu bewirken..

Es ist auch möglich, die Taste 10 mit Druckpunktschaltungen auszustatten. Der erste Druckpunkt bewirkt dabei ein Umschalten auf Bereitschaftsbetrieb, der zweite Druckpunkt, der beim weiteren Niederdrücken erreicht wird, bewirkt ein gänzliches Abschalten durch Trennung des Gerätes vom Netz über den magnetisch steuerbaren Netzschalter.

Selbstverständlich ist es grundsätzlich auch möglich, daß die AUS-Befehls-Auswertung im Mikroprozessor 5 der Fernbedienungseinrichtung im Gerät selbst vorgenommen wird. Dann ist es allerdings erforderlich, daß beide Befehle, nämlich der Umschaltbefehl auf Standby-Betrieb und der Umschaltbefehl auf AUS-Betrieb übertragen, decodiert und entsprechend zugeordnete Steuerbefehle an die Transistoren 6 und 7 ausgegeben werden.

Im Falle der Verwendung eines Fernbedienungsgebers mit einem Mikroprozessor, der eine Schaltfunktion selbst erzeugt, um den AUS-Befehl in Abhängigkeit von der Umschaltung auf Bereitschaftsbetrieb zu bewirken und die Zeitspanne zum Generieren des Ausschaltbefehls beispielsweise frei definierbar ist, z.B. 0,5 Stunden, 1 Stunde oder länger, wie dies aus der DE 40 21 386 C2 grundsätzlich bekannt ist, hat den Vorteil, daß ein AUS-Befehl abgegeben werden kann, der zugleich auf für mehrere vorhandene unterhaltungselektronische Geräte mit genutzt werden kann, um sicherzustellen, daß alle Geräte ausgeschaltet werden, wenn ein Hauptgerät selbsttätig ausgeschaltet werden soll, z.B. wenn ein Benutzer eingeschlafen ist. Beispielsweise können damit auch Hifi-Geräte, die im Bereich des Fernsehempfänger untergebracht sind, gleichzeitig mit angesteuert werden, um bei Erkennen eines AUS-Befehls auszuschalten. Dadurch ist sichergestellt, daß alle Geräte unter Verwendung nur eines einzigen Fernbedienungsgebers in der Ausschaltfunktion steuerbar sind. Die gemeinsame AUS-Steuerung aller Geräte läßt sich auch durch einen einheitlichen AUS-Befehl für alle Geräte mit Fernbedienungsempfänger realisieren.

Die erfindungsgemäß Schaltung ist aber auch generell in Verbindung mit einem Fernbedienungsempfänger einsetzbar, der dann in Betrieb bleibt, wenn eine Netztrennung vom Gerät selbst erfolgt ist. Für diesen Fall muß allerdings eine eigene Stromversorgung für den Fernbedienungsempfänger sichergestellt sein, wie dies vorher schon angegeben ist. Anstelle des vorhandenen Netzschalters mit Magnetspule kann die Abschaltfunktion auch von einem Relais oder mittels eines elektrisch steuerbaren Halbleiterschalters realisiert werden. Bei Verwendung eines Halbleiterschalters könnte das hörbare Zurückspringen durch ein entsprechendes Geräusch aus dem Lautsprecher immitiert werden. Das Einschalten ist dann jeweils über einen Tastschalter möglich, wie dies beispielsweise aus der DE 30 45 715 C2 bekannt ist.

Bei Verwendung einer einzelnen Taste, wie sie im Fernbedienungsgeber 9 als Taste 10 angegeben ist, kann z.B. durch Niederhalten der Taste 10 für drei Sekunden die Generierung des Ausschaltbefehls erfolgen, der dann zur Trennung vom Gerät führt. Die Erfindung bietet dem Fachmann eine Vielzahl von Gestaltungsmöglichkeiten, um den notwendigen zweiten Ausschaltbefehl zu generieren, ohne daß im Fernbedienungsempfänger solche vorgesehen sein müssen.

Die Ansteuerung kann aber auch von einem Fernbedienungsgeber 14 aus erfolgen, der anstelle von Tasten Eingaben für die Umschalt- und EIN- und AUS-Befehle, aber auch für andere Befehle, einen Sprachanalysator mit einem Mikroprozessor 16 aufweist, der in Abhängigkeit von in das Mikrofon 15, das am Fernbedienungsgeber vorgesehen ist, eingegebener verbaler Befehle entsprechende EIN-, Um- und AUS-Befehle an den Infrarotlichtempfänger 8 überträgt, die in gleicher Weise die Steuerung bewirken, wie sie vorher beschrieben ist. Eine Fernsteuerung mittels Sprachanalysator ist aus der DE 27 55 633 C2 bekannt und durch die darin angegebenen Mittel realisierbar.

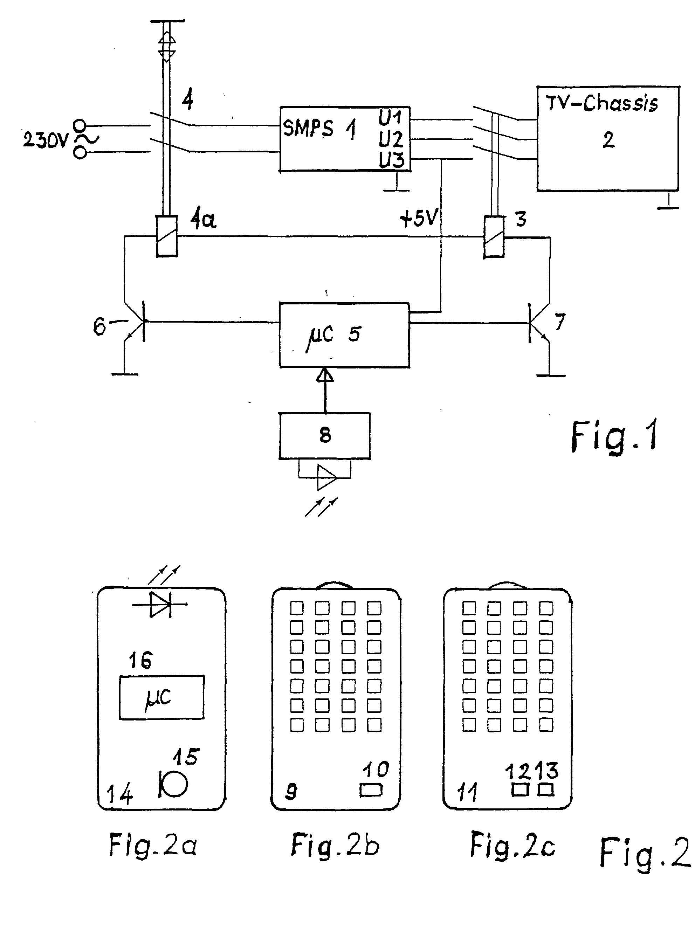

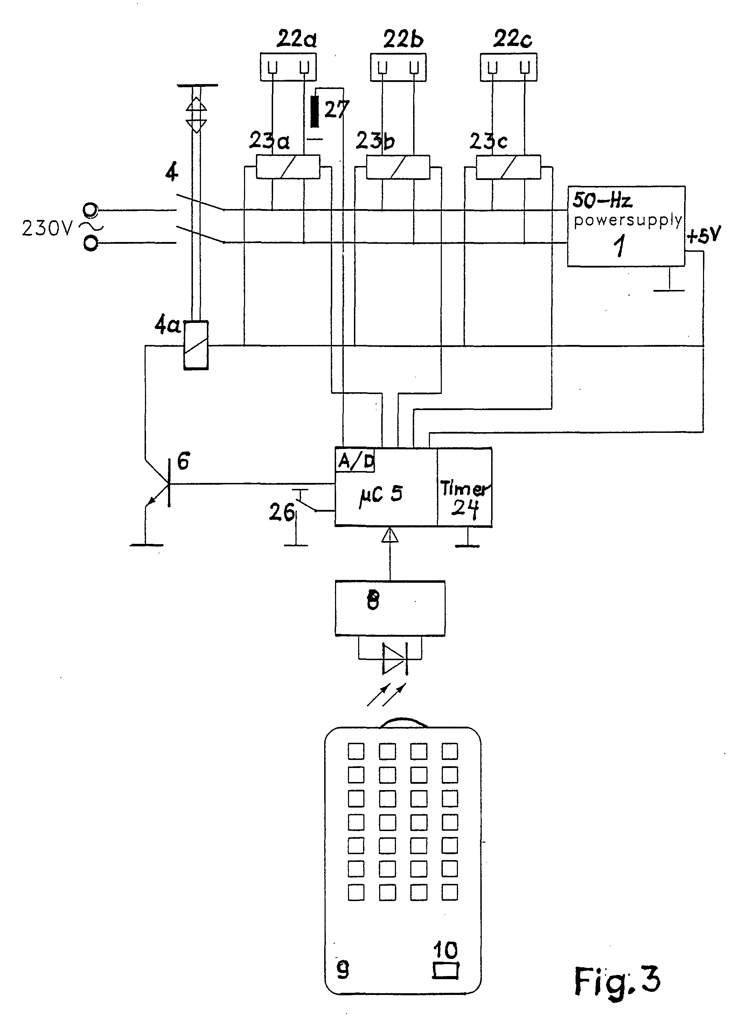

In Figur 3 ist in Form eines Blockschaltbildes eine Schaltung nach der Erfindung dargestellt, die in ein externes Zusatzgerät integriert ist und eine Standby-Abschaltautomatik der beschriebenen Art aufweist, zusätzlich aber auch noch die individuelle Ansteuerung der Netzspannung führenden Ausgänge 22a, 22b und 22c ermöglicht. Übereinstimmend mit dem Ausführungsbeispiel in Figur 1 ist ein Netzschalter 4 vorgesehen, der eine Magnetspule 4a aufweist, durch die vom Mikroprozessor 5 gesteuert zum Abschalten ein Strom fließt, zu welchem Zweck ein Schalter 6, ein Transistor, gesteuert wird. Die Magnetspule öffnet den Kontakt des Netzschalters 4, dessen Eingangskontakte an dem Stromversorgungsnetz 230 V-anliegen. Durch diese Maßnahme können die Steckdosen 22a, 22b und 22c allesamt auf einmal vom Netz getrennt. Es ist aber auch möglich, die vorgesehenen Relais in den Relais 23a, 23b und 23c gesondert vom Mikroprozessor der Fernbedienungssteuereinrichtung 5 ansteuern zu lassen, um getrennt die einzelnen Ausgänge über die vorgesehenen Trennschalter 23a ,23b und 23c zu trennen. Mit der Trennung des gesamten Gerätes über den Netzschalter 4 vom Stromversorgungsnetz ist zugleich auch das Netzteil 1 vom Netz getrennt, so daß auch der angeschlossene Fernbedienungsmikroprozessor 5 stromlos geschaltet wird; ein Wiedereinschalten ist in diesem Fall per Fernbedienung nicht möglich. Dies ist nur dann möglich, wenn der Mikroprozessor als Bestandteil der Fernbedienungssteuereinrichtung und der Infrarotlichtempfänger 8 gemeinsam an einer eigenen Stromversorgungsquelle, z. B. an ein Akkumulator, während der Netztrennung angeschaltet bleiben. Als Besonderheit bei diesem Zusatzgerät ist vorgesehen, daß der Mikroprozessor lernfähig und programmierbar ist, zu welchem Zweck eine Programmiertaste 26 vorgesehen ist. Wird diese Taste betätigt, so empfängt der Infrarotlichtempfänger 8 kodierte Fernsteuerbefehle, z. B. den Umschaltbefehl in den Standby-Betrieb, der ein AUS-Befehl sein kann, und/oder einen abweichenden weiteren AUS-Befehl. Diese werden detektiert und in einem Speicher abgespeichert. Erfolgt nun eine Bedienung nach dem Umschalten der Programmiertaste 26 in der Weise, daß eine AUS-Funktion bewirkt werden soll, um den Netzschalter 4 auszuschalten, so wird dies als zugehöriger Befehl erkannt und die entsprechende Steuerfunktion bewerkstelligt, z. B. bei einmal "AUS"-Drücken in Standby geschaltet und beim zweitenmal Drücken ganz ausgeschaltet. Werden darüber hinaus Ausschalt- oder Umschaltfunktionen einzelner anzuschließender Verbraucher programmiert, so können die Relais 23a, 23b und 23c individuell gesteuert werden. Wenn ferner die Einschaltfunktion auch programmiert ist, so ist ein Wiedereinschalten möglich, solange die Fernbedienungssteuereinrichtung 5 nicht vom Netz getrennt ist, bzw. eine andere Stromquelle den Betrieb aufrecht erhält. Als weitere Besonderheit ist vorgesehen, daß dann, wenn beispielsweise ein angeschlossenes Fernsehgerät unmittelbar in den Standby-Betrieb umgeschaltet wird, also nicht über das Zusatzgerät, ein induktiver Stromsensor 27 den fließenden niedrigen Strom erkennt. Der Prozessor wandelt diese Größe in einen A/D-Wandler um und vergleicht sie mit einem Schwellenwert, so daß im Falle des Erkennens des Standby-Betriebes des angeschlossenen Fernsehgerätes (oder anderer Geräte) nach einer bestimmten Zeit der weiterhin vorgesehene Timer 24 im Prozessor 5 die Abschaltung vom Netz bewirkt.

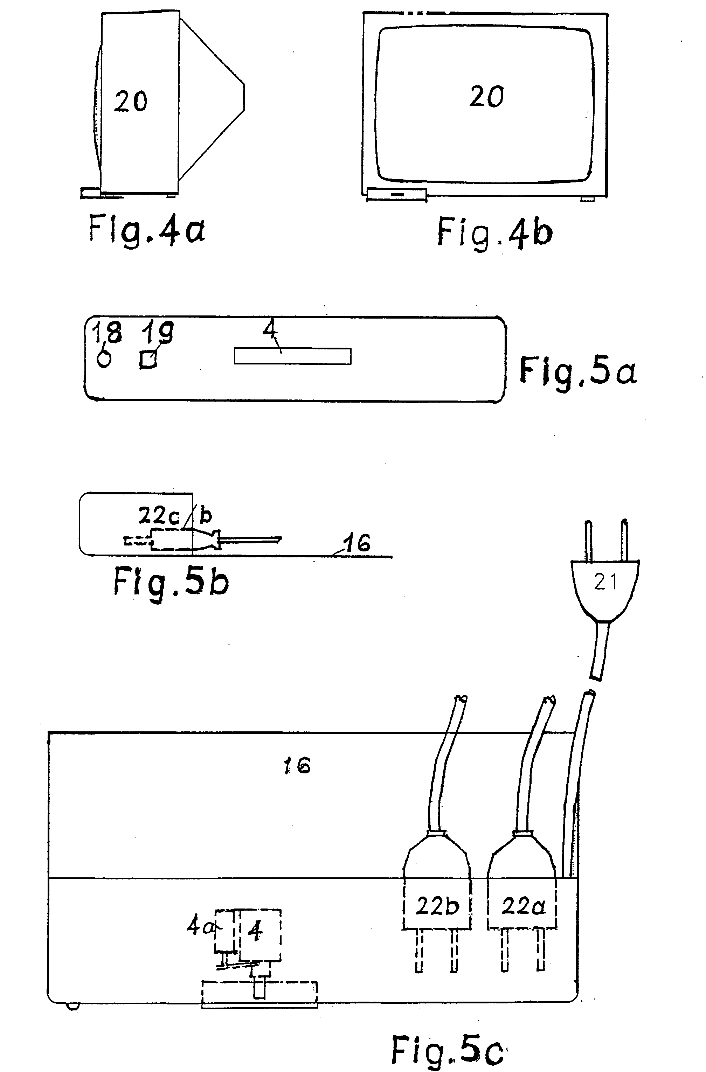

Die in Figur 3 gezeichnete Schaltung kann in einem Gerät gemäß Figuren 5a, 5b, und 5c angeordnet sein. Dieses Zusatzgerät ist - wie aus den Figuren 4a und 4b ersichtlich - vor einen Fernsehempfänger 20 stellbar und mit einer Platte 16 unterschiebbar. Das Zusatzgerät 15 hat eine schmale längliche Form und eine Grundplatte 16, z. B. aus Metall oder Kunststoff. Vorne sichtbar ist ein Netzschalter 4 vorgesehen, der die aus Figuren 1 und 3 ersichtliche Funktion inne hat. Ferner ist in der Vorderwand eine Infrarotdiode 19 für den Empfang der Fernbedienungssignale vorgesehen und eine Leuchtdiode zur Anzeige des Betriebes des Gerätes. An der Rückseite sind - wie aus Figur 5b und 5c ersichtlich - ein Anschluß 21 zum Stromversorgungsnetz und weitere Buchsen 22a, 22b und 22c vorgesehen, in die die Stecker der anzuschließenden Gerätes, z. B. des Fernsehempfängers 20 in Figur 4a und 4b, eingesteckt werden können. Die relativ große Grundplatte 16 ermöglicht, daß das Fernsehgerät mit einem Fuß darauf aufgestellt werden kann und somit das vorstehende Gerät stets vom Fernbedienungsgeber aber auch vom Benutzer erreichbar ist, um den Netzschalter nach dem Abschalten manuell wieder eindrücken zu können. Die Zuleitungen an das Gerät erfolgen von der Rückseite her, so daß Kabel nicht störend sichtbar sind. Es ist aber auch eine andere Ausgestaltungsform dieses Zusatzgerätes möglich. Ebenso kann das Zusatzgerät mittels Klebeband an das Fernsehgerät befestigt sein oder aber auch an einem anderen Gerät, wobei auch andere elektronische Geräte an ein solches Gerät anschließbar sind. Der Fernsehempfänger, der an ein solches Gerät beispielsweise angeschlossen ist, reagiert in gewohnter Weise. Wird die AUS-Taste der Fernbedienung betätigt, so schaltet der Fernsehempfänger über seinen eigenen Infrarotempfänger und der Steuereinrichtung in den Standby-Betrieb, der mit dem Zusatzgerät mittels eines induktiven Stromsensors 27 ermittelt wird, der wiederum den Timer des Mikroprozessors steuert. Dieser kann so programmiert sein, daß eine unmittelbare Ausschaltung erfolgt oder aber auch automatisch eine zeitverzögerte, z. B. in 3 Stunden erfolgende Abschaltung vom Netz erfolgt. Es ist aber auch möglich, daß der Benutzer die AUS-Taste beispielsweise über 3 Sekunden drückt, so daß der Mikroprozessor 5 des Zusatzgerätes dies als Befehl zum völligen Ausschalten erkennt und der Netzschalter 4 herausspringt. Es ist also dem Benutzer möglich, das Gerät per Fernbedienung völlig vom Netzstrom abzuschalten und alle Komponenten vom Netz zu trennen, wodurch Energie gespart wird und Sicherheit im Betrieb im Abschaltzustand gegeben ist. Falls einmal das manuelle Abschalten vergessen wird, wirkt die Automatik der Fernbedienungssteuereinrichtung 4 durch den integrierten Timer 24, der die Abschaltung bewirkt.

Das Zusatzgerät kann sowohl den Standby-Befehl als auch den Abschaltbefehl der Fernbedienung des jeweiligen Fernsehgerätes erkennen. Das Zusatzgerät sollte einen lernfähigen Mikroprozessor besitzen, der mindestens den Code des Abschaltbefehls abspeichern kann. Dazu muß der Benutzer bei der erstmaligen Inbetriebnahme die am Boden versteckte Programmiertaste 26 und gleichzeitig die AUS-Taste der Fernbedienung drücken. Eine Hersteller-spezifisch programmierte Lösung ist ebenfalls möglich.

Es ist anstelle der Stromdetektorschaltung auch möglich, den Standby-Befehl unmittelbar von der Fernbedienungssteuereinrichtung 5 auswerten zu lassen oder aber über einen nicht dargestellten Bus vom angeschalteten Gerät zu übertragen, um diese Funktionssteuerung in dem Timer in den Prozessor zu aktivieren. Bei vorhandener induktiver Strommessung durch den Stromsensor 27 ist eine einfache Lösung gegeben. Hierzu ist es weiterhin erforderlich, eine der mehreren Kupferdrahtwindungen um eine Phase der Kupferzuleitung zu wickeln, die eine proportionale Spannung induziert. Ein ferromagnetischer Kern oder Ring kann die Wirkung verstärken. Die Auswertung dieser Spannung kann direkt vom Mikroprozessor erfolgen, sofern dieser - wie dargestellt - einen A/D-Wandler-Eingang hat.

## Patentansprüche

1. Fernsteuerbare Schaltungsanordnung zum An- und Abschalten mindestens eines an eine Stromversorgungsquelle anschließbaren elektrischen Verbrauchers, aufweisend mindestens eine steuerbare Funktionsschaltung,
- mit einem Betriebsartenumschalter (3), bei dessen Betätigung der Verbraucher aus einer bestimmungsgemäßen Betriebsart in eine Bereitschaftsbetriebsart umschaltet, in der mindestens eine Empfängerschaltung (8) einer Fernbedienungssteuereinrichtung (5) eingeschaltet ist, die von einem Fernbedienungsgeber (9) drahtgebunden oder drahtlos übertragene Funktionssteuersignale empfängt, auswertet und die zu steuernden Funktionsschaltungen (2) des Verbrauchers in Abhängigkeit davon ansteuert, und
- mit einem steuerbaren Trennschalter (4) im Stromversorgungsstromzweig zum Abschalten des Verbrauchers von der Stromversorgungsquelle,
- wobei die Schaltung des Fernbedienungsgebers (9) in Abhängigkeit von der Betätigung eines bestimmten Funktionsstellelementes (10) einen Steuerbefehl zum Umschalten des Verbrauchers aus der bestimmungsgemäßen Betriebsart in den Bereitschaftsbetrieb abgibt und bei Abgabe eines weiteren Befehls durch unmittelbar wiederholte oder längere Betätigung desselben Funktionsstellelementes (10) den steuerbaren Trennschalter (4) über die Fernbedienungssteuereinrichtung (5) derart steuert, daß diese einschließlich der Empfängerschaltung (8) und anderer Funktionsschaltungen (2) des Verbrauchers von der Stromversorgungsquelle (230 V∼) gänzlich getrennt sind,
- wobei eine Wiederanschaltung des Gerätes an das Netz über einen Steuerbefehl des Fernbedienungsgebers nicht möglich ist und
- bei der Generierung des Steuerbefehls zum Umschalten in den Bereitschaftsbetrieb gleichzeitig eine Zeitsteuerschaltung aktiviert wird, die ein festes oder einstellbares Zeitfenster öffnet und mit dessen Ablauf ein Ausschaltsignal für die Trennung des Verbrauchers von der Stromversorgungsquelle abgibt.

2. Schaltungsanordnung nach Anspruch 1, **dadurch gekennzeichnet, daß** sie in einem Vorschaltgerät eines elektrischen Verbrauchers angeordnet ist,
- daß mindestens eine Stromversorgungszuführung (21) und mindestens ein Stromversorgungsausgang (22) vorgesehen sind,
- daß mindestens ein Trennschalter (4)im Stromversorgungszweig (230 V∼) und/oder vor dem Stromversorgungsausgang (22) vorgesehen ist, an welchem Ausgang mindestens ein elektrischer Verbraucher anschließbar ist.

3. Schaltungsanordnung nach Anspruch 1, **dadurch gekennzeichnet, daß** sie in einem Verbraucher integriert ist, der ein nachrichtentechnisches Gerät ist,
- daß mindestens eine Stromversorgungszuführung (21) und mindestens ein Stromversorgungsausgang (22) vorgesehen sind,
- daß mindestens ein Trennschalter (4)im Stromversorgungszweig (230 V∼) und/oder vor dem Stromversorgungsausgang (22) vorgesehen ist, an welchem Ausgang mindestens eine elektrische bzw. elektronische Funktionsschaltung des Gerätes selbst als elektrischer Verbraucher angeschlossen ist.

4. Schaltungsanordnung nach einem der vorhergehenden Ansprüche, **dadurch gekennzeichnet, daß** der Verbraucher ein Fernsehempfangsgerät, Rundfunkgerät, Videorecorder, Satellitenempfangsgerät, CD-Player, Kassettenrecorder, Digitalsignaldecoder (Set-Top-Decoder), ein analoges oder digitales Ton und/oder Bildaufzeichnungsgerät, ein elektrisches Spielgerät, wie Videospielkonsole, ein Computer oder eine Fernseh- oder sonstige Stehlampe oder ein Kombinationsgerät aus den genannten Verbrauchern ist.

5. Schaltungsanordnung nach einem der vorhergehenden Ansprüche, **dadurch gekennzeichnet, daß** der Trennschalter (23a, b, c) ein elektromechanischer oder elektronischer Schalter, insbesondere ein steuerbarer Halbleiterschalter ist und gesteuert einschaltbar und ausschaltbar ist.

6. Schaltungsanordnung nach einem der Ansprüche 1 bis 5, **dadurch gekennzeichnet, daß** der Trennschalter (4) nur über ein am Verbraucher oder am Vorschaltgerät vorhandenes Betätigungselement einschaltbar ist.

7. Schaltungsanordnung nach einem der vorhergehenden Ansprüche **dadurch gekennzeichnet, daß** eine Taste mit einem ersten und einem zweiten Druckpunkt vorgesehen ist, wobei in der Fernbedienungsgeberschaltung bei Ausübung eines ersten Betätigungsdruckes die Generierung eines Steuerbefehls für den Bereitschaftsbetrieb und bei starkem Druck die Generierung eines AUS-Befehls erfolgt.

8. Schaltungsanordnung nach Anspruch 1, **dadurch gekennzeichnet, daß** mit der Generierung des Umschaltbefehls zum Umschalten des Verbrauchers in den Bereitschaftsbetrieb gleichzeitig eine Zeitsteuerschaltung in dem Fernbedienungsgeber aktiviert wird, die eine fest vorgesehene oder einstellbare Abschaltzeitdauer bewirkt, und daß die Fernbedienungsgeberschaltung mit Ablauf der Abschaltzeitdauer den Ausschaltbefehl generiert, der automatisch an den Fernbedienungsempfänger übertragen wird.

9. Schaltungsanordnung nach Anspruch 1, **dadurch gekennzeichnet, daß** die Fernbedienungssteuereinrichtung (5) einen Mikroprozessor enthält, der die Funktionen nach einem abgespeicherten Programm steuert.

## Claims

1. Remotely controllable circuit arrangement for switching on and switching off at least one electrical consumer connectible to a source of current supply, comprising at least one controllable function circuit,
- with an operating mode changeover switch (3), on the actuation of which the consumer is changed over from an intended operating mode to a readiness operating mode in which at least one receiver circuit (8) is connected with a remote control device (5), which receives function control signals transmitted from a remote control transmitter (9) by way of wire or otherwise than by way of wire, and which evaluates the signals and controls in drive the function circuits (2), which are to be controlled, of the consumer in dependence thereon, and
- with a controllable isolating switch (4) in the current supply current branch for switching off the consumer from the current supply source,
- wherein the circuit of the remote control transmitter (9) issues, in dependence on the actuation of a specific function setting element (10), a control command for changing over the consumer from the intended mode of operation to the readiness operation and on issue of a further command by directly repeated or longer actuation of the same function setting element (10) controls the controllable isolating switch (4) by way of the remote control device (5) in such a manner that this is entirely separated, inclusive of the receiver circuit (8) and other function circuits (2) of the consumer, from the current supply source (230 V∼),
- wherein a reconnection of the appliance with the mains by way of a control command of the remote control transmitter is not possible and
- on generation of the control command for changing over to the readiness operation a time control circuit is simultaneously activated which opens a fixed or settable time window and on expiry thereof issues a switch-off signal for separation of the consumer from the current supply source.

2. Circuit arrangement according to claim 1, **characterised in that** it is arranged in a power supply unit of an electrical consumer,
- that at least one current supply feed (21) and at least one current supply outlet (22) are provided,
- that at least one isolating switch (4) is provided in the current supply branch (230 V-) and/or in front of the current supply outlet (22), with which outlet at least one electrical consumer is connectible.

3. Circuit arrangement according to claim 1, **characterised in that** it is integrated in a consumer which is a communications apparatus,
- that at least one current supply feed (21) and at least one current supply outlet (22) are provided,
- that at least one isolating switch (4) is provided in the current supply branch (230 V∼) and/or in front of the current supply outlet (22), with which output at least one electrical or electronic function circuit of the apparatus itself is connected as electrical consumer.

4. Circuit arrangement according to one of the preceding claims, **characterised in that** the consumer is a television receiver set, a radio set, a videorecorder, a satellite receiver, a compact disc player, a cassette recorder, a digital signal decoder (set-top-decoder), an analog or digital sound and/or image recording apparatus, an electrical games apparatus, such as a video games console, a computer or a television lamp or other standard lamp or a combination apparatus consisting of the stated consumers.

5. Circuit arrangement according to one of the preceding claims, **characterised in that** the isolating switch (23a, b, c) is an electromechanical or electronic switch, particularly a controllable semiconductor switch, and can be switched on and switched off in controlled manner.

6. Circuit arrangement according to one of claims 1 to 5, **characterised in that** the isolating switch (4) can be switched on only by way of an actuating element present at the consumer or at the power supply unit.

7. Circuit arrangement according to one of the preceding claims, **characterised in that** a button with a first and a second pressure point is provided, wherein in the remote control transmitter circuit on exertion of a first actuating pressure the generation of a control command for the operating readiness takes place and on stronger pressure the generation of an OFF command takes place.

8. Circuit arrangement according to claim 1, **characterised in that** on the generation of the changeover command for changing over of the consumer to the readiness operation a time control circuit in the remote control transmitter is simultaneously activated, which causes a fixedly provided or settable switch-off time duration, and that the remote control transmitter circuit on expiry of the switch-off time duration generates the switch-off command which is automatically transmitted to the remote control receiver.

9. Circuit arrangement according to claim 1, **characterised in that** the remote control device (5) contains a microprocessor which controls the functions in accordance with a stored program.

## Revendications

1. Montage télécommandable pour la connexion et la déconnexion d'au moins un appareil consommateur électrique pouvant être connecté à une source d'alimentation en courant, comprenant au moins un circuit fonctionnel commandable, comportant
- un commutateur de types de fonctionnement (3), lors de l'actionnement duquel l'appareil consommateur est commuté d'un type de fonctionnement conforme aux spécifications à un type de fonctionnement de disponibilité, dans lequel au moins un circuit de réception (8) d'un dispositif de télécommande (5), qui reçoit des signaux de commande de fonctionnement transmis par fil ou sans fil par un générateur de télécommande (9), évalue ces signaux et commande des circuits fonctionnels à commander (2) de l'appareil consommateur en fonction de ces signaux, et
- un sectionneur commandable (4) situé dans la branche d'alimentation pour déconnecter l'appareil consommateur de la source d'alimentation en courant,
- dans lequel le circuit du générateur de télécommande (9) délivre, en fonction de l'actionnement d'un certain élément de réglage de fonction (10), une instruction de commande pour commuter l'appareil consommateur depuis le type de fonctionnement conforme aux spécifications dans le fonctionnement de disponibilité et, lors de la délivrance d'une autre instruction, au moyen d'un actionnement répété ou plus long du même élément de réglage de fonction (10), commande le sectionneur commandable (4) au moyen du dispositif de télécommande (5) de telle sorte que ce dispositif y compris le circuit de réception (8) et d'autres circuits fonctionnels (2) de l'appareil consommateur sont complètement séparés de la source d'alimentation en courant (230 V-),
- dans lequel une reconnexion de l'appareil au réseau n'est pas possible au moyen d'une instruction de commande du générateur de télécommande, et
- lors de la production de l'instruction de commande pour la commutation dans le fonctionnement de disponibilité, un circuit de commande temporelle est simultanément activé, circuit qui ouvre une fenêtre temporelle fixe ou réglable et, lors du déroulement de cette dernière, délivre un signal de débranchement pour la séparation de l'appareil consommateur vis-à-vis de la source d'alimentation en courant.

2. Montage selon la revendication 1, **caractérisé en ce qu'**il est disposé dans un ballast d'un appareil consommateur électrique,
- qu'il est prévu au moins une amenée (21) d'alimentation en courant et au moins une sortie (22) d'alimentation en courant,
- qu'il est prévu au moins un sectionneur (4) qui est situé dans la branche d'alimentation en courant (230 V-) et/ou en amont de la sortie d'alimentation en courant (22), sortie à laquelle peut être connecté au moins un appareil consommateur électrique.

3. Montage selon la revendication 1, **caractérisé en ce qu'**il est intégré dans un appareil consommateur, qui est un appareil de la technique de transmission d'informations,
- qu'il est prévu au moins une amenée (21) d'alimentation en courant et au moins une sortie (22) d'alimentation en courant,
- qu'au moins un sectionneur (4) est prévu dans la branche d'alimentation en courant (230 V-) et/ou en amont de la sortie d'alimentation en courant (22), sortie à laquelle est connecté au moins un circuit fonctionnel électrique ou électronique de l'appareil lui-même, en tant qu'appareil consommateur électrique.

4. Montage selon l'une des revendications précédentes, **caractérisé en ce que** l'appareil consommateur est un récepteur de télévision, un appareil de radiodiffusion, un enregistreur vidéo, un récepteur de satellite, un lecteur de disques compacts CD, un enregistreur à cassette, un décodeur de signaux numériques (décodeur Set-Top), un appareil analogique ou numérique d'enregistrement du son et/ou de l'image, un appareil de jeu électrique, comme par exemple une console de jeu vidéo, un ordinateur ou une lampe de télévision ou une autre lampe fixe ou un appareil combiné formé par les appareils consommateur indiqués.

5. Montage selon l'une des revendications précédentes, **caractérisé en ce que** le sectionneur (23a, b, c) est un interrupteur électromécanique ou électronique, notamment un interrupteur à semiconducteurs commandables et peut être activé et désactivé d'une manière commandée.

6. Montage selon l'une des revendications 1 à 5, **caractérisé en ce que** le sectionneur (4) peut être activé uniquement par l'intermédiaire d'un élément d'actionnement présent sur l'appareil consommateur ou sur le ballast.

7. Montage selon l'une des revendications précédentes, **caractérisé en ce qu'**il est prévu une touche comportant des premier et second points de pression, auquel cas dans le circuit formant générateur de télécommande, lors de l'application d'une première pression d'actionnement, on obtient la production d'une instruction de commande pour le fonctionnement de disponibilité et lors d'une pression intense, on obtient la production de l'instruction ARRET.

8. Montage selon la revendication 1, **caractérisé en ce que** lors de la production de l'instruction de commutation servant à commuter l'appareil consommateur dans l'état de disponibilité, simultanément un circuit de commande temporelle est activé dans le générateur de télécommande, ce circuit de commande temporelle réalisant une durée de déconnexion prévue de façon fixe ou réglable, et qu'un circuit formant générateur de télécommande produit, après la fin de la durée de déconnexion, l'instruction de déconnexion qui est transmise automatiquement au récepteur de télécommande.

9. Montage selon la revendication 1, **caractérisé en ce que** le dispositif de télécommande (5) est un microprocesseur qui commande les fonctions selon un programme mémorisé.
